# EUROPÄISCHE PATENTSCHRIFT

(11) **EP 3 122 631 B1**
(45) Veröffentlichungstag und Bekanntmachung des Hinweises auf die Patenterteilung: **26.10.2022**
(21) Anmeldenummer: 15711466.1
(22) Anmeldetag: 13.03.2015
(51) Int. Cl.: B64D 11/06

(54) **FLUGZEUGSITZSYSTEM**
AIRCRAFT SEAT SYSTEM
SYSTÈME DE SIÈGE D'AVION

(30) Priorität: 24.03.2014 DE 102014104054
(43) Veröffentlichungstag der Anmeldung: 01.02.2017
(73) Patentinhaber: Recaro Aircraft Seating GmbH & Co. KG, 74523 Schwäbisch Hall (DE)
(72) Erfinder: CLUCAS, Daniel William, London E9 6FS (GB); ERSAN, Ali, London Greater London E2 0QA (GB)
(74) Vertreter: Daub, Thomas
(86) Internationale Anmeldenummer: PCT/EP2015/055353
(87) Internationale Veröffentlichungsnummer: WO 2015/144464

(56) Entgegenhaltungen:
- WO-A1-2005/014395
- WO-A2-2010/100500
- GB-A- 2 500 258
- US-A1- 2009 066 121
- US-A1- 2012 298 798
- US-A1- 2012 305 705

## Beschreibung

### Stand der Technik

Die Erfindung betrifft ein Flugzeugsitzsystem nach dem Oberbegriff des Patentanspruchs 1.

Es ist bereits ein Flugzeugsitzsystem mit zumindest einem ersten Flugzeugsitzbereich, der einen ersten Flugzeugsitz umfasst, und mit zumindest einem zweiten, hinter dem ersten Flugzeugsitzbereich angeordneten Flugzeugsitzbereich, der einen zweiten Flugzeugsitz umfasst, vorgeschlagen worden.

Aus der Druckschrift US 2012/305705 A1 ist bereits ein Flugzeugsitzsystem mit zumindest zwei Flugzeugsitzbereichen mit jeweils zwei Flugzeugsitzen, welche in eine Liegeposition geschwenkt werden können, bekannt.

Die Druckschrift US 2009/0066121 A1 offenbart ein Flugzeugsitzsystem mit zumindest zwei Flugzeugsitzbereichen, welche jeweils einen Flugzeugsitz umfassen, wobei sich die einen Flugzeugsitze auf einer niedrigeren Ebene relativ zum Flugzeugboden befinden, während andere Flugzeugsitze auf einer zweiten Ebene angeordnet sind, welche über der ersten Ebene liegt, wobei sich immer abwechselnd einer der Flugzeugsitze auf einer anderen Ebene als der Flugzeugsitz davor befindet.

Die Druckschrift WO 2005/014395 A1 offenbart ein Flugzeugsitzsystem mit mehreren Flugzeugsitzbereichen, in denen jeweils ein Flugzeugsitz angeordnet ist, wobei hintereinander positionierte Flugzeugsitze derart versetzt zueinander angeordnet sind, sodass eine Liegefläche des hinteren Flugzeugsitzes in einer Liegeposition seitlich neben der Liegefläche des vorderen Flugzeugsitzes angeordnet ist.

Die Druckschrift WO 2010/100500 A2 offenbart ein Flugzeugsitzsystem, das mehrere Flugzeugsitzbereiche mit sich hintereinander wiederholenden Flugzeugsitzen umfasst, wobei die Flugzeugsitze der mittleren Flugzeugsitzbereiche jeweils in voneinander weg zeigende Blickrichtungen ausgerichtet sind und eine V-förmige Anordnung zueinander bilden, sodass sich die Flugzeugsitze in einer Liegeposition nicht überlappen.

Die Druckschrift GB 2 500 258 A offenbart ein Flugzeugsitzsystem mit mehreren Flugzeugsitzbereichen, welche zumindest einen Flugzeugsitz umfassen, wobei die Flugzeugsitze nebeneinander und schräg zur Flugrichtung angeordnet sind und in einer Liegeposition seitlich neben einer Liegefläche des vorderen Flugzeugsitzes vorbeiführen.

Die Aufgabe der Erfindung besteht insbesondere darin, eine gattungsgemäße Vorrichtung mit verbesserten Eigenschaften hinsichtlich einer besonders vorteilhaften kompakten Anordnung von in einem Flugzeug montierten Flugzeugsitzen bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einem Flugzeugsitzsystem mit zumindest einem ersten Flugzeugsitzbereich, der einen ersten Flugzeugsitz umfasst, der einen Sitzboden, der mit einer Rückenlehne des Flugzeugsitzes schwenkbar gekoppelt ist, und eine verschwenkbar mit dem Sitzboden gekoppelte Beinauflage aufweist, mit zumindest einem zweiten, hinter dem ersten Flugzeugsitzbereich angeordneten Flugzeugsitzbereich, der einen zweiten Flugzeugsitz umfasst, der einen Sitzboden, der mit einer Rückenlehne des Flugzeugsitzes schwenkbar gekoppelt ist, und eine verschwenkbar mit dem Sitzboden gekoppelte Beinauflage aufweist, wobei der erste Flugzeugsitzbereich und der zweite Flugzeugsitzbereich zusammen eine Flugzeugsitzeinheit bilden, wobei der Flugzeugsitz des zweiten Flugzeugsitzbereichs in einem montierten Zustand zumindest in einer Liegeposition zumindest teilweise überlappend unterhalb des ersten Flugzeugsitzbereichs angeordnet ist und wobei die Flugzeugsitze in der Liegeposition eine ebene Liegefläche ausbilden, wobei sich die beiden Liegeflächen der Flugzeugsitze in den Liegepositionen überlappen, und mit einem weiteren ersten Flugzeugsitzbereich und einem weiteren zweiten Flugzeugsitzbereich, die zu zweit wieder eine Flugzeugsitzeinheit ausbilden und jeweils einen Flugzeugsitz aufweisen.

Es wird vorgeschlagen, dass der Sitzboden des ersten Flugzeugsitzes in einer TTL-Position eine gleiche Höhe aufweist wie der Sitzboden des zweiten Flugzeugsitzes in einer TTL-Position, wobei die Flugzeugsitzeinheiten mit den Flugzeugsitzbereichen in einer Flugzeugkabine in einer Herringbone-Flugzeugsitzanordnung angeordnet sind, wobei die Flugzeugsitze jeweils schräg zu einer Flugrichtung ausgerichtet sind, wobei die Flugzeugsitzbereiche jeweils einen direkten Gangzugang aufweisen. Unter einem "Flugzeugsitz" soll dabei insbesondere ein Sitz verstanden werden, der in einer Kabine eines Flugzeugs aufgeständert ist und der dazu vorgesehen ist, einen Sitzplatz für eine Person im Flugzeug bereitzustellen. Unter einem Flugzeugsitz soll in diesem Zusammenhang insbesondere ein Business-Class-Flugzeugsitz oder ein First-Class-Flugzeugsitz verstanden werden. Grundsätzlich ist es allerdings auch denkbar, dass der Flugzeugsitz als ein Economy-Class-Flugzeugsitz ausgebildet ist. Unter einem "Flugzeugsitzbereich" soll dabei insbesondere ein Bereich verstanden werden, den eine Person in einer Flugzeugkabine zur Verfügung hat. Dabei weist ein Flugzeugsitzbereich vorzugsweise mehrere Anbauelemente für eine Benutzung durch einen Fluggast auf, wie beispielsweise eine Tischablage, einen Monitor oder Verstaumöglichkeiten. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Unter einem "montierten Zustand" soll dabei insbesondere ein Zustand verstanden werden, in dem die Flugzeugsitze in einem Flugzeug fest installiert sind. Unter einer "TTL-Position" soll dabei insbesondere eine aufrechte Position des Flugzeugsitzes verstanden werden, die aus Sicherheitsgründen, insbesondere in einer Startphase, in einer Landephase und während Turbulenzen, eingenommen werden muss. Dabei stehen in der TTL-Position eine Rückenlehne des Flugzeugsitzes und der Sitzboden im Wesentlichen senkrecht aufeinander, vorzugsweise in einem Winkel von zwischen 90 Grad und 105 Grad. Die TTL-Position bildet dabei eine erste Endposition aus, in die der Flugzeugsitz maximal verstellbar ist. Unter einer "Liegeposition" soll dabei insbesondere eine im Wesentlichen waagerechte Position des Flugzeugsitzes verstanden werden, in der sowohl der Sitzboden als auch die Rückenlehne des Flugzeugsitzes im Wesentlichen parallel zu der Aufständerebene, auf der der Flugzeugsitz aufgeständert ist, ausgerichtet sind. In der Liegeposition weisen der Sitzboden und die Rückenlehne des Flugzeugsitzes jeweils eine Ausrichtung auf, wobei die Ausrichtungen im Wesentlichen parallel zueinander ausgerichtet sind. Unter der Wendung "zumindest teilweise überlappend" soll dabei insbesondere verstanden werden, dass zumindest ein Bereich des zweiten Flugzeugsitzes in der Liegeposition in einer Ansicht senkrecht zu der Aufständerebene überschneidend mit dem ersten Flugzeugsitzbereich angeordnet ist. Dadurch können die zwei hintereinander angeordneten Flugzeugsitze mit einem besonders vorteilhaft geringen Abstand zueinander positioniert werden, wobei beide Flugzeugsitze in der Liegeposition eine vorteilhaft große Liegefläche ausbilden. Dadurch kann insbesondere eine vorteilhaft kompakte Anordnung von Flugzeugsitzen mit einem vorteilhaft großen Flugzeugsitzbereich in einem Flugzeug bereitgestellt werden.

Weiter wird vorgeschlagen, dass die Flugzeugsitze der beiden Flugzeugsitzbereiche in einer Flucht zueinander ausgerichtet sind. Darunter, dass die "Flugzeugsitze in einer Flucht zueinander ausgerichtet sind", soll dabei insbesondere verstanden werden, dass in Sitzrichtung ausgerichtete Mittelachsen der beiden Flugzeugsitze koaxial zueinander liegen. Der eine Flugzeugsitz ist dabei genau hinter dem anderen Flugzeugsitz angeordnet. Unter einer "Sitzrichtung" soll insbesondere eine Richtung verstanden werden, welche, bei einem ordnungsgemäßen Sitzen eines Passagiers, im Wesentlichen der Richtung entspricht, in welcher sich die Oberschenkel des Passagiers vom Gesäß bis zum Kniebereich erstrecken. In einer aufrechten Stellung eines Flugzeugsitzes, in welcher eine Rückenlehne senkrecht zu der Aufständerebene ausgerichtet ist, ist die Sitzrichtung parallel zu einem Kabinenboden und senkrecht zu der von der Rückenlehne gebildeten Rückenlehnenfläche ausgerichtet. Dadurch können zwei hintereinander angeordnete Flugzeugsitze besonders vorteilhaft und platzsparend zueinander ausgerichtet werden.

Es wird weiter vorgeschlagen, dass der erste Flugzeugsitz und der zweite Flugzeugsitz einen Montageabstand aufweisen, der maximal 165 cm (65 Zoll) beträgt. Unter einem "Montageabstand" soll dabei insbesondere ein Abstand verstanden werden, mit dem zwei Elemente, insbesondere die beiden Flugzeugsitze zueinander, in dem Flugzeug montiert sind. Dabei wird der Montageabstand zwischen den beiden Flugzeugsitzen zwischen zwei gleichen Punkten der beiden Flugzeugsitze gemessen, beispielsweise zwischen einer Vorderkante einer Aufständereinheit der Flugzeugsitze oder einer Hinterkante von Rückenlehnen der beiden Flugzeugsitze, wobei die beiden Flugzeugsitze eine gleiche Position aufweisen, wie insbesondere die TTL-Position. Dadurch bilden die Flugzeugsitze der hintereinander angeordneten Flugzeugsitzbereiche eine besonders vorteilhaft kompakte Einheit.

Zudem wird vorgeschlagen, dass der Flugzeugsitz des zweiten Flugzeugsitzbereichs in einer Liegeposition zumindest 25,4 cm (10 Zoll) mit dem Flugzeugsitz des ersten Flugzeugsitzbereichs überlappt. Unter "zumindest 25,4 cm (10 Zoll) überlappen" soll dabei insbesondere verstanden werden, dass der Flugzeugsitz wenigstens 25,4 cm (10 Zoll), vorzugsweise zumindest 30,5 cm (12 Zoll) und in einer besonders vorteilhaften Ausgestaltung wenigstens 38,1 cm (15 Zoll) mit dem zweiten

Flugzeugsitzbereich überlappt. Dadurch kann eine besonders vorteilhaft kompakte Anordnung der beiden Flugzeugsitze erreicht werden.

Ferner wird vorgeschlagen, dass der Flugzeugsitz des ersten Flugzeugsitzbereichs den Sitzboden aufweist, der bei einer Verstellung von einer TTL-Position in eine Liegeposition dazu vorgesehen ist, angehoben zu werden. Unter einem "Sitzboden" soll dabei insbesondere ein Boden eines Sitzes, insbesondere eines Flugzeugsitzes, verstanden werden, der dazu vorgesehen ist, eine Sitzfläche für einen Gast bereitzustellen. Darunter, dass der "Sitzboden angehoben wird", soll dabei insbesondere verstanden werden, dass der Sitzboden bei einer Verstellung von der TTL-Position in die Liegeposition von dem Kabinenboden weg bewegt wird. Dadurch kann der Flugzeugsitz in einer Liegeposition besonders vorteilhaft für eine Überlappung mit dem zweiten Flugzeugsitz positioniert werden.

Weiter wird vorgeschlagen, dass der Flugzeugsitz des zweiten Flugzeugsitzbereichs den Sitzboden aufweist, der bei einer Verstellung von einer TTL-Position in eine Liegeposition dazu vorgesehen ist, abgesenkt zu werden. Dadurch kann der Flugzeugsitz in einer Liegeposition besonders vorteilhaft für eine Überlappung mit dem ersten Flugzeugsitz positioniert werden.

Zudem wird vorgeschlagen, dass der erste Flugzeugsitzbereich eine starre Beinauflage aufweist, deren Höhe größer ist als eine Höhe einer starren Beinauflage des zweiten Flugzeugsitzbereichs. Unter einer "starren Beinauflage" soll dabei insbesondere eine fest mit einer Konsole, insbesondere mit einem Ottoman, verbundene Beinauflage verstanden werden, die zusammen mit den Elementen eines Flugzeugsitzes, wie Rückenlehne, Sitzboden und Beinauflage, eine ebene Liegefläche ausbildet. Die starre Beinauflage ist in einer Sitzposition des Flugzeugsitzes, wie beispielsweise in der TTL-Position, beabstandet zu dem Flugzeugsitz angeordnet und erweitert den Flugzeugsitz lediglich in der Liegeposition. Dadurch können die Beinauflagen besonders vorteilhaft für die Ausbildung der Liegeflächen der beiden Flugzeugsitze angeordnet werden.

Darunter, dass die Flugzeugsitze "in der Liegeposition eine ebene Liegefläche ausbilden", soll dabei insbesondere verstanden werden, dass Elemente der Flugzeugsitze, wie insbesondere eine Rückenlehne, ein Sitzboden und eine Beinstütze, jeweils eine ebene Fläche ausbilden. Dabei weist die ebene Liegefläche einen Winkel von 3 Grad zu einem Kabinenboden aus. Dadurch kann der Flugzeugsitz in der Liegeposition eine besonders ergonomische und vorteilhafte Liegefläche bereitstellen.

Weiterhin wird vorgeschlagen, dass der erste Flugzeugsitzbereich einen Monitor aufweist, dessen Höhe größer ist als eine Höhe eines Monitors des zweiten Flugzeugsitzbereichs. Dadurch können die Monitore vorteilhaft für die unterschiedlichen Liegehöhen der beiden Flugzeugsitze angeordnet werden.

Unter einer "Flugrichtung" soll dabei insbesondere eine Haupterstreckungsrichtung des Flugzeugs verstanden werden, wobei sich die Flugrichtung von einem Heck des Flugzeugs zu einem Bug des Flugzeugs erstreckt und vorzugsweise koaxial zu einer Mittelachse des Flugzeugs verläuft. Darunter, dass die Flugzeugsitze schräg zu der Flugrichtung ausgerichtet sind", soll dabei insbesondere verstanden werden, dass eine Sitzrichtung der Sitze in einem in dem Flugzeug montierten Zustand einen Winkel zwischen 5 Grad und 20 Grad zu der Flugrichtung aufweist. Dadurch kann eine besonders vorteilhafte Anordnung der Flugzeugsitze erreicht werden.

Unter einem "Gangzugang" soll dabei insbesondere ein direkter Zugang von einem Flugzeuggang zu dem Flugzeugsitzbereich verstanden werden. Dabei verläuft ein Zugang zu einem Flugzeugsitzbereich insbesondere nicht durch einen anderen, benachbarten Flugzeugsitzbereich. Ein Passagier kann direkt von dem Flugzeuggang in seinen Flugzeugsitzbereich eintreten. Dadurch sind die Flugzeugsitze besonders vorteilhaft zu erreichen.

Unter "weiteren ersten und zweiten Flugzeugsitzbereichen" sollen dabei insbesondere Flugzeugsitzbereiche verstanden werden, die gleich ausgebildet und zueinander ausgerichtet sind wie der erste Flugzeugsitzbereich und der zweite Flugzeugsitzbereich, die jeweils einen Flugzeugsitz umfassen. Dabei sind der erste und der zweite Flugzeugsitzbereich, sowie die weiteren Flugzeugsitzbereiche in einer Herringbone-Anordnung in einer Flugzeugkabine angeordnet. Dadurch kann eine Flugzeugkabine besonders vorteilhaft mit Flugzeugsitzen ausgestattet werden.

Es wird weiter vorgeschlagen, dass das Flugzeugsitzsystem wenigstens zwei weitere erste und zweite Flugzeugsitzbereiche aufweist, die gespiegelt zu den Flugzeugsitzbereichen an einer gegenüberliegenden Kabinenwand angeordnet sind. Dadurch kann eine besonders vorteilhafte Anordnung der weiteren Flugzeugsitzbereiche an einer gegenüberliegenden Kabinenwand erreicht werden.

Weiterhin wird vorgeschlagen, dass das Flugzeugsitzsystem wenigstens zwei weitere erste und zweite Flugzeugsitzbereiche aufweist, die in einem Mittelbereich der Flugzeugkabine angeordnet sind und in Flugrichtung zu den Flugzeugsitzbereichen verschoben sind. Unter einem "Mittelbereich einer Flugzeugkabine" soll dabei insbesondere ein Bereich in einer Flugzeugkabine verstanden werden, der, quer zu einer Flugrichtung gesehen, in einer Mitte der Flugzeugkabine angeordnet ist. Dabei ist der Mittelbereich vorzugsweise von zwei Flugzeuggängen begrenzt, durch die Personen zu den einzelnen, im Mittelbereich und an den Kabinenwänden angeordneten Flugzeugsitzen gelangen können. Dadurch kann eine besonders vorteilhafte und kompakte Schachtelung der Flugzeugsitzbereiche in einem Mittelbereich der Flugzeugkabine erreicht werden.

Ferner wird vorgeschlagen, dass auf einer Kabinenlänge von 1143 cm (450 Zoll) wenigstens 38 Flugzeugsitzbereiche bereitgestellt werden. Unter einer Kabinenlänge" soll dabei insbesondere eine Länge einer Flugzeugkabine verstanden werden, in der die Flugzeugsitze angeordnet werden. Die 1143 cm (450 Zoll), die hier für die Kabinenlänge angegeben sind, entsprechen dabei einer typischen Länge eines Business-Class-Abteils in einer Flugzeugkabine. Die Flugzeugkabine weist dabei eine Kabinenbreite auf, die zusammen mit der Kabinenlänge eine Kabinenfläche aufspannt, auf der die Flugzeugsitzbereiche angebracht sind. Dadurch kann eine besonders gute Raumausnutzung in der Flugzeugkabine erreicht werden.

Das erfindungsgemäße Flugzeugsitzsystem soll hierbei nicht auf die oben beschriebene Anwendung und Ausführungsform beschränkt sein. Insbesondere kann das erfindungsgemäße Flugzeugsitzsystem zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung eines erfindungsgemäßen Flugzeugsitz-systems mit zwei Flugzeugsitzbereichen und deren Flugzeugsitzen in einer TTL-Position,
- Fig. 2: eine schematische Darstellung der beiden Flugzeugsitze in einer Stellung zwischen der TTL-Position und einer Liegeposition,
- Fig. 3: eine schematische Darstellung der beiden Flugzeugsitze in der Liegeposition und
- Fig. 4: eine schematische Darstellung von mehreren ersten und zweiten Flugzeugsitzbereichen in einer Flugzeugkabine.

### Beschreibung des Ausführungsbeispiels

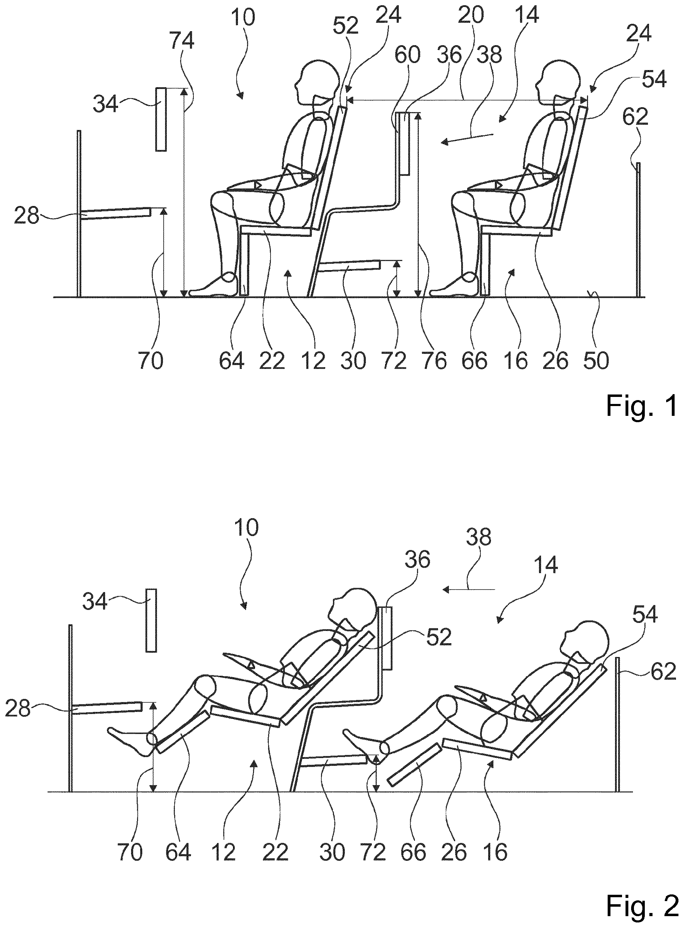

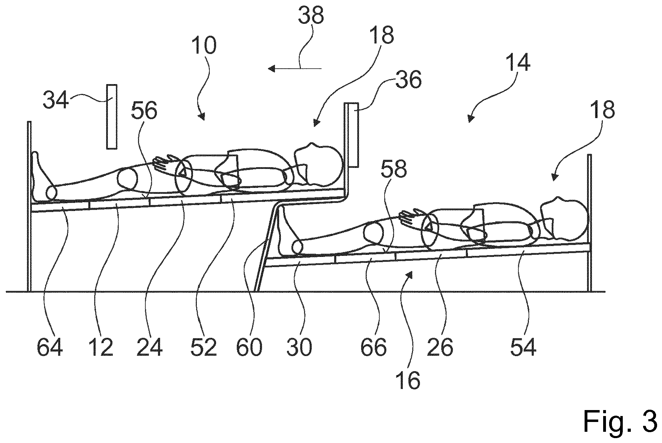

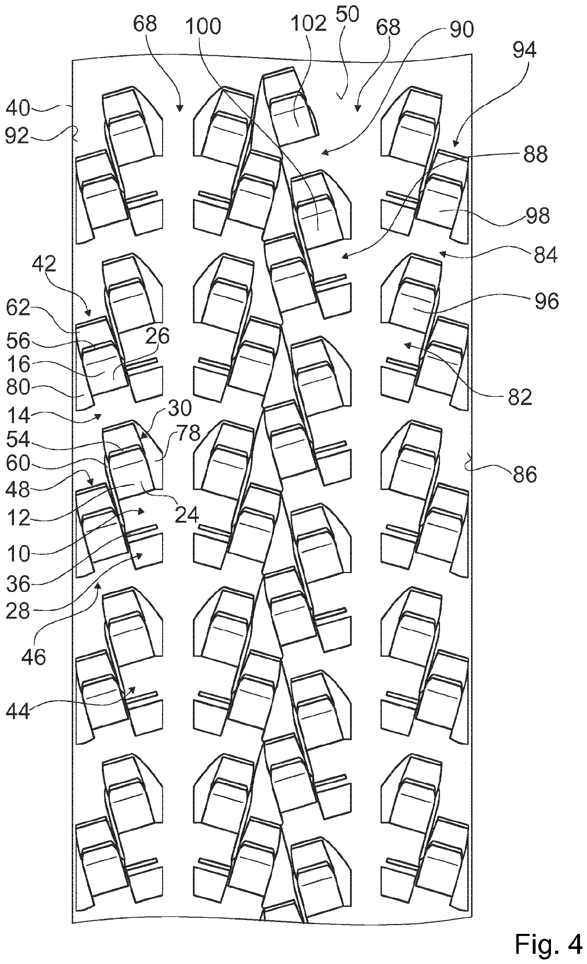

Die Figuren 1 bis 4 zeigen ein erfindungsgemäßes Flugzeugsitzsystem. Das Flugzeugsitzsystem ist Teil eines nicht näher dargestellten Flugzeugs. Das Flugzeug umfasst eine teilweise dargestellte Flugzeugkabine 40, in der das Flugzeugsitzsystem angeordnet ist. Die Flugzeugkabine 40 bildet einen Kabinenboden 50 aus. Der Kabinenboden 50 bildet eine Aufständerebene der Flugzeugkabine 40. Das Flugzeugsitzsystem umfasst einen ersten Flugzeugsitzbereich 10. Der erste Flugzeugsitzbereich 10 umfasst einen ersten Flugzeugsitz 12. Das Flugzeugsitzsystem umfasst einen zweiten Flugzeugsitzbereich 14. Der zweite Flugzeugsitzbereich 14 umfasst einen zweiten Flugzeugsitz 16. Der erste Flugzeugsitzbereich 10 und der zweite Flugzeugsitzbereich 14 bilden zusammen eine Flugzeugsitzeinheit 42. Die Flugzeugsitze 12, 16 sind auf der Aufständerebene, die von dem Kabinenboden 50 der Flugzeugkabine 40 ausgebildet wird, aufgeständert. Dazu weisen die Flugzeugsitze 12, 16 jeweils eine nicht näher dargestellte Aufständereinheit auf. Der erste Flugzeugsitzbereich 10 umfasst ein Shellelement 60, das den ersten Flugzeugsitzbereich 10 teilweise von einem Rest der Flugzeugkabine 40 und dem zweiten Flugzeugsitzbereich 14 abgrenzt. Der zweite Flugzeugsitzbereich 14 umfasst ebenfalls ein Shellelement 62, das den zweiten Flugzeugsitzbereich 14 zumindest teilweise von einem Rest der Flugzeugkabine 40 abgrenzt. Die Shellelemente 60, 62 begrenzen die Flugzeugsitzbereiche 10, 14 jeweils in einem Seitenbereich sowie an einer Vorderseite und einer Rückseite, wobei die Shellelemente 60, 62 in einem Seitenbereich einen Zugang zu dem jeweiligen Flugzeugsitzbereich 10, 14 frei lassen. Im Weiteren sollen die Shellelemente 60, 62 hier nicht beschrieben werden, da ihre Ausgestaltung aus dem Stand der Technik ausreichend bekannt ist. Die Flugzeugsitzbereiche 10, 14 weisen dabei jeweils einen direkten Gangzugang auf. Eine Person kann von einem Flugzeuggang 68 der Flugzeugkabine 40 direkt in den entsprechenden Flugzeugsitzbereich 10, 14 gelangen. Das Flugzeugsitzsystem weist weitere erste Flugzeugsitzbereiche 44 und zweite Flugzeugsitzbereiche 46 auf. Die weiteren ersten und zweiten Flugzeugsitzbereiche 44, 46 bilden dabei zu zweit jeweils wieder eine Flugzeugsitzeinheit 48 aus und weisen jeweils einen Flugzeugsitz auf. Dabei sind in der Figur 4 die Flugzeugsitzeinheit 48 und die Flugzeugsitzeinheit 42 mit ihren ersten Flugzeugsitzbereichen 10, 44 und ihren zweiten Flugzeugsitzbereichen 14, 46 angezeichnet. Das Flugzeugsitzsystem weist auf einer Kabinenlänge von 1143 cm (450 Zoll) 38 Flugzeugsitzbereiche 10, 14, 44, 46 auf. Dabei sind die 38 Flugzeugsitzbereiche 10, 14, 44, 46 jeweils zu zweit in Flugzeugsitzeinheiten 42, 48 angeordnet. Die Flugzeugsitzeinheiten 42, 48 mit den Flugzeugsitzbereichen 10, 14, 44, 46 sind dabei in der Flugzeugkabine 40 in einer Herringbone-Flugzeugsitzanordnung angeordnet. Dabei sind die Flugzeugsitze 12, 16 jeweils schräg zu einer Flugrichtung 38 des Flugzeugs ausgerichtet. Die Flugzeugsitzeinheit 42, also die Flugzeugsitze 12, 16 der Flugzeugsitzbereiche 10, 14, sind an einer Kabinenwandseite angeordnet. Dabei zeigen die Flugzeugsitze 12, 16 mit ihrer Rückseite in Richtung einer Kabinenwand 92. Die Flugzeugsitze 12, 16 weisen dabei jeweils einen Winkel von 10 Grad zu der Flugrichtung auf. Eine Sitzrichtung der Flugzeugsitze 12, 16 ist in dem Winkel von 10 Grad zu der Flugrichtung 38 ausgerichtet. Mit einem vorderen Ende weisen die Flugzeugsitze 12, 16 jeweils in Richtung eines Mittelbereichs der Flugzeugkabine. Die Flugzeugsitzeinheit 48 ist dabei parallel versetzt zu der Flugzeugsitzeinheit 42 angeordnet, wobei die Rückseiten der entsprechenden Flugzeugsitze ebenfalls in Richtung der Kabinenwand 92 ausgerichtet sind. Grundsätzlich ist es dabei auch denkbar, dass die Flugzeugsitze 12, 16 der Flugzeugsitzeinheiten 42, 48 in Richtung der Kabinenwand 92 ausgerichtet sind und die Rückseiten der Flugzeugsitze 12, 16 jeweils in Richtung des Mittelbereichs der Flugzeugkabine 40 ausgerichtet sind. Der hintere Flugzeugsitz der Flugzeugsitzeinheit 48 ist dabei neben dem ersten, vorderen Flugzeugsitz 12 des ersten Flugzeugsitzbereichs 10 ausgerichtet. Die weiteren Flugzeugsitzeinheiten sind, wie in Figur 4 zu sehen, äquivalent zu der jeweilig dahinter angeordneten Flugzeugsitzeinheit 42, 48 angeordnet. Das Flugzeugsitzsystem weist weitere erste Flugzeugsitzbereiche 82 und zweite Flugzeugsitzbereiche 84 auf. Die weiteren Flugzeugsitzbereiche 82, 84 sind äquivalent zu den Flugzeugsitzbereichen 10, 14, 44, 46 ausgebildet. Dabei sind die weiteren Flugzeugsitzbereiche 82, 84 gespiegelt zu den Flugzeugsitzbereichen 10, 14 an einer gegenüberliegenden Kabinenwand 86 angeordnet. Die Flugzeugsitzbereiche 82, 84 sind auf der gegenüberliegenden Kabinenwand 86 ebenfalls in Flugzeugsitzeinheiten 94 angeordnet. Eine Anordnung der Flugzeugsitzeinheiten 94 auf der gegenüberliegenden Kabinenwand 92 ist äquivalent zu der Anordnung der Flugzeugsitzeinheiten 42, 48. Die Flugzeugsitzbereiche 82, 84 weisen jeweils einen Flugzeugsitz 96, 98 auf. Durch die gespiegelte Anordnung der Flugzeugsitzbereiche 82, 84 weisen die Flugzeugsitze 96, 98 mit ihrer Sitzrichtung ebenfalls einen Winkel von 10 Grad zu der Flugrichtung 38 auf.

Das Flugzeugsitzsystem weist weitere erste Flugzeugsitzbereiche 88 und zweite Flugzeugsitzbereiche 90 auf. Die Flugzeugsitzbereiche 88, 90 sind äquivalent zu den Flugzeugsitzbereichen 10, 14, 44, 46 ausgebildet. Dabei sind die Flugzeugsitzbereiche 88, 90 in dem Mittelbereich der Flugzeugkabine 40 angeordnet. Die Flugzeugsitzbereiche 88, 90 sind dabei in Flugrichtung 38 zu den Flugzeugsitzbereichen 10, 14 versetzt. Die Flugzeugsitzbereiche 88, 90 zeigen dabei in Flugrichtung 38 mit ihrer Sitzrichtung von dem Mittelbereich weg in Richtung der Kabinenwand 86. Die Flugzeugsitzbereiche 88, 90 umfassen Flugzeugsitze 100, 102, die in einem Winkel von 10 Grad zu der Flugrichtung ausgerichtet sind. Weitere, nicht näher angezeigte Flugzeugsitzbereiche, die ebenfalls in dem Mittelbereich angeordnet sind, sind gespiegelt zu den Flugzeugsitzbereichen 88, 90 ausgebildet und ihre Flugzeugsitze sind mit ihrer Sitzrichtung in Richtung der Flugzeugsitzbereiche 10, 14 und der Kabinenwand 92 ausgerichtet. Die weiteren Flugzeugsitzbereiche sind dabei verschachtelt mit den anderen Flugzeugsitzbereichen 88, 90, die der einen Kabinenwand 86 zugewandt sind, in dem Mittelbereich der Flugzeugkabine 40 angeordnet und dabei der gegenüberliegenden Kabinenwand 92 zugewandt (siehe Figur 4). Dadurch kann eine besonders vorteilhafte dichte Packungsdichte der Flugzeugsitze 12, 16, 96, 98, 100, 102 und der Flugzeugsitzbereiche 10, 14, 44, 46, 82, 84, 88, 90 erreicht werden.

Im Folgenden werden lediglich die beiden Flugzeugsitzbereiche 10, 14 der Flugzeugsitzeinheit 42 näher beschrieben. Dabei sind die folgenden Ausführungen auf die anderen Flugzeugsitzbereiche 44, 46, 82, 84, 88, 90 der anderen Flugzeugsitzeinheiten 48, 94 übertragbar. Die anderen Flugzeugsitzbereiche 44, 46, 82, 84, 88, 90 der anderen Flugzeugsitzeinheiten 48, 94 sind im Wesentlichen äquivalent zu den Flugzeugsitzbereichen 10, 14 der Flugzeugsitzeinheit 42 ausgebildet. Die Flugzeugsitze 12, 16 weisen eine TTL-Position 24 und eine Liegeposition 18 auf. In der TTL-Position 24 sind die Flugzeugsitze 12, 16 in einer aufrechten Stellung, wobei eine Rückenlehne 52, 54 des jeweiligen Flugzeugsitzes 12, 16 im Wesentlichen senkrecht zu der Aufständerebene, die von dem Kabinenboden 50 ausgebildet wird, ausgerichtet ist. In der Liegeposition 18 bilden die beiden Flugzeugsitze 12, 16 jeweils eine ebene Liegefläche 56, 58 aus. Dabei weisen die Liegeflächen 56, 58, die die Flugzeugsitze 12, 16 in der Liegeposition 18 jeweils ausbilden, einen Winkel von 3 Grad zu dem Kabinenboden 50 auf. Grundsätzlich ist es natürlich denkbar, dass die ebenen Liegeflächen 56, 58 der Flugzeugsitze 12, 16 einen anderen, dem Fachmann als sinnvoll erscheinenden Winkel zu dem Kabinenboden 50 aufweisen. Die Flugzeugsitze 12, 16 umfassen jeweils eine nicht näher dargestellte Kinematik, über die die Flugzeugsitze 12, 16 jeweils zwischen der TTL-Position 24 und der Liegeposition 18 verfahren werden können. Dabei ist eine Kinematik des ersten Flugzeugsitzes 12 des ersten Flugzeugsitzbereichs 10 anders ausgebildet als die Kinematik des zweiten Flugzeugsitzes 16 des zweiten Flugzeugsitzbereichs 14. Durch die unterschiedlichen Kinematiken verfahren die beiden Flugzeugsitze 12, 16 unterschiedlich zwischen der TTL-Position 24 und der jeweiligen Liegeposition 18. Die Kinematiken weisen dabei jeweils Aktuatoren auf, über die die Flugzeugsitze 12, 16 jeweils zwischen ihren verschiedenen Positionen verstellt werden können. Grundsätzlich ist es natürlich auch denkbar, dass für die beiden Flugzeugsitze 12, 16 eine gleiche Kinematik zum Verstellen der Flugzeugsitze 12, 16 verwendet wird, wobei die Kinematiken beispielsweise einen doppelt so langen Verfahrweg aufweisen und in beiden Flugzeugsitzen 12, 16 mit einer unterschiedlichen Orientierung eingebaut sind, sodass die jeweilige Kinematik je nach Ausrichtung einen anderen Verfahrweg bei einer Verstellung von der TTL-Position in die Liegeposition aufweist. Grundsätzlich ist es auch denkbar, dass die gleichen Kinematiken in beide Flugzeugsitze 12, 16 integriert sind und die unterschiedlichen Verfahrwege durch eine unterschiedliche Ansteuerung der Kinematiken erzeugt werden.

Der Flugzeugsitz 12 des ersten Flugzeugsitzbereichs 10 und der Flugzeugsitz 16 des zweien Flugzeugsitzbereichs 14 sind in einer Flucht zueinander angeordnet. Der Flugzeugsitz 12 des ersten Flugzeugsitzbereichs 10 und der Flugzeugsitz 16 des zweiten Flugzeugsitzbereichs 14 sind exakt hintereinander angeordnet. Dabei liegen Mittelachsen der beiden Flugzeugsitze 12, 16, die jeweils parallel zu einer Sitzrichtung der Flugzeugsitze 12, 16 verlaufen, koaxial zueinander. Der zweite Flugzeugsitz 16 ist dabei hinter dem ersten Flugzeugsitz 12 angeordnet. Der zweite Flugzeugsitzbereich 14 liegt dabei hinter dem ersten Flugzeugsitzbereich 10. Richtungsangaben, wie vorne und hinten, beziehen sich dabei auf eine Position im Flugzeug, also auf ein vorderes Ende und ein hinteres Ende des Flugzeugs. Die beiden Flugzeugsitze 12, 16 weisen einen Montageabstand 20 von 147 cm (58 Zoll) auf. Der Montageabstand 20 ist dabei von zwei gleichen Punkten der beiden Flugzeugsitze 12, 16 gemessen, wobei sich die beiden Flugzeugsitze 12, 16 in einer gleichen Position befinden. Beispielhaft ist der Montageabstand 20 in Figur 1 angezeigt, wobei der Montageabstand 20 hier von einem hintersten Punkt der Flugzeugsitze 12, 16 in der TTL-Position 24 gemessen wird.

Der zweite Flugzeugsitz 16 des zweiten Flugzeugsitzbereichs 14 ist in einem montierten Zustand in der Liegeposition 18 überlappend unterhalb des ersten Flugzeugsitzbereichs 10 angeordnet. Dabei ist ein Bereich der Liegefläche 58, die der zweite Flugzeugsitz 16 in der Liegeposition 18 ausbildet, im Bezug auf den Kabinenboden 50 unterhalb des ersten Flugzeugsitzbereichs 10 angeordnet. Die Liegefläche 58 des zweiten Flugzeugsitzes 16 erstreckt sich in der Liegeposition 18 bis unter den ersten Flugzeugsitzbereich 10, der den ersten Flugzeugsitz 12 aufweist. Der Flugzeugsitz 16 des zweiten Flugzeugsitzbereichs 14 überlappt um 45,7 cm (18 Zoll) mit dem ersten Flugzeugsitzbereich 10. Ist sowohl der erste Flugzeugsitz 12 als auch der zweite Flugzeugsitz 16 in der Liegeposition 18, so ist ein Teil der ebenen Liegefläche 58, die der zweite Flugzeugsitz 16 in der Liegeposition 18 ausbildet, im Bezug auf den Kabinenboden 50 unterhalb eines Bereichs der Liegefläche 56, die der erste Flugzeugsitz 12 in der Liegeposition 18 ausbildet, angeordnet. In den Liegepositionen 18 überlappen sich die beiden Liegeflächen 56, 58 der beiden Flugzeugsitze 12, 16. Dabei überlappen sich die Liegeflächen 56, 58 der beiden Flugzeugsitze 12, 16 in der Liegeposition 18 um 38,1 cm (15 Zoll). Grundsätzlich ist es auch denkbar, dass sich die Liegeflächen 56, 58 der beiden Flugzeugsitze 12, 16 in der Liegeposition 18 um mehr als 38,1 cm (15 Zoll), beispielsweise um 45,7 cm (18 Zoll) oder 50,8 cm (20 Zoll) überlappen. Der erste Flugzeugsitz 12 und der zweite Flugzeugsitz 16 weisen dabei in der jeweiligen Liegeposition 18 unterschiedliche Höhen auf. Die Liegefläche 56 des ersten Flugzeugsitzes 12 ist in der Liegeposition 18 weiter von dem Kabinenboden 50 beabstandet als die Liegefläche 58 des zweiten Flugzeugsitzes 16 in der Liegeposition 18. Dadurch kann eine Überlappung der beiden Liegeflächen 56, 58 in den Liegepositionen 18 erreicht werden. Dabei weist die Liegefläche 58 des zweiten Flugzeugsitzes 16 in der Liegeposition 18, senkrecht zu dem Kabinenboden 50 gemessen, einen Abstand von 30,5 cm (12 Zoll) zu einer Begrenzung des ersten Flugzeugsitzbereichs 10 auf.

Der Flugzeugsitz 12 des ersten Flugzeugsitzbereichs 10 weist einen Sitzboden 22, der mit der Rückenlehne 52 des Flugzeugsitzes 12 verschwenkbar gekoppelt ist, und eine verschwenkbar mit dem Sitzboden 22 gekoppelte Beinauflage 64 auf. Der Sitzboden 22, die Rückenlehne 52 und die Beinauflage 64 des Flugzeugsitzes 12 des ersten Flugzeugsitzbereichs 10 sind über die entsprechende, nicht näher dargestellte Kinematik des Flugzeugsitzes 12 miteinander gekoppelt und zueinander bewegbar. In der Liegeposition 18 bilden die Rückenlehne 52, der Sitzboden 22 und die Beinauflage 64 einen Teil der Liegefläche 56 des ersten Flugzeugsitzes 12 aus. Bei einer Verstellung des Flugzeugsitzes 12 des ersten Sitzbereichs 10 von der TTL-Position 24 in die Liegeposition 18 wird der Sitzboden 22 des Flugzeugsitzes 12 angehoben. Bei einer Verstellung des Flugzeugsitzes 12 des ersten Sitzbereichs 10 von der Liegeposition 18 in die TTL-Position 24 wird der Sitzboden 22 des Flugzeugsitzes 12 abgesenkt.

Der Flugzeugsitz 16 des zweiten Flugzeugsitzbereichs 14 weist einen Sitzboden 26, der mit der Rückenlehne 54 des Flugzeugsitzes 16 verschwenkbar gekoppelt ist, und eine verschwenkbar mit dem Sitzboden 26 gekoppelte Beinauflage 66 auf. Der Sitzboden 26, die Rückenlehne 54 und die Beinauflage 66 des Flugzeugsitzes 16 des zweiten Flugzeugsitzbereichs 14 sind über die entsprechende, nicht näher dargestellte Kinematik des Flugzeugsitzes 16 miteinander gekoppelt und zueinander bewegbar. In der Liegeposition 18 bilden die Rückenlehne 54, der Sitzboden 26 und die Beinauflage 66 einen Teil der Liegefläche 56 des zweiten Flugzeugsitzes 16 aus. Bei einer Verstellung des Flugzeugsitzes 16 des zweiten Sitzbereichs 14 von der TTL-Position 24 in die Liegeposition 18 wird der Sitzboden 22 des Flugzeugsitzes 12 abgesenkt. Bei einer Verstellung des Flugzeugsitzes 16 des zweiten Sitzbereichs 14 von der Liegeposition 18 in die TTL-Position 24 wird der Sitzboden 26 des Flugzeugsitzes 12 angehoben. In der TTL-Position 24 weist der Sitzboden 22 des Flugzeugsitzes 12 des ersten Sitzbereichs 10 eine gleiche Höhe auf wie der Sitzboden 26 des Flugzeugsitzes 16 des zweiten Flugzeugsitzbereichs 14. Dadurch weisen die beiden Flugzeugsitze 12, 16 in der TTL-Position 24 jeweils eine gleiche Sitzhöhe auf. Dadurch kann vorteilhaft für alle Flugzeugsitze 12, 16 des Flugzeugsitzsystems eine gleichbleibende Sitzhöhe erreicht werden.

Der erste Flugzeugsitzbereich 10 umfasst eine starre Beinauflage 28. Die starre Beinauflage 28 ist fest mit dem Shellelement 60 des ersten Flugzeugsitzbereichs 10 verbunden. Die starre Beinauflage 28 weist einen Winkel von 3 Grad zu dem Kabinenboden 50 auf. Die starre Beinauflage 28 ist dabei an einem vorderen Ende des ersten Flugzeugsitzbereichs 10 angeordnet. Die Beinauflage 28 ist dazu vorgesehen, die Liegefläche 56, die der erste Flugzeugsitz 12 in der Liegeposition 18 ausbildet, zu vergrößern. Die starre Beinauflage 28 bildet in der Liegeposition 18 des ersten Flugzeugsitzes 12 zusammen mit der Beinauflage 64, dem Sitzboden 22 und der Rückenlehne 52 des ersten Flugzeugsitzes 12 die ebene Liegefläche 56 des ersten Flugzeugsitzes 12 aus. Der zweite Flugzeugsitzbereich 14 umfasst eine starre Beinauflage 30. Die starre Beinauflage 30 ist fest mit dem Shellelement 60 des ersten Flugzeugsitzbereichs 10 verbunden. Dabei ist die starre Beinauflage 30 auf einer dem ersten Flugzeugsitzbereich 10 abgewandten Seite des Shellelements 60 angeordnet. Die starre Beinauflage 30 ragt in den zweiten Flugzeugsitzbereich 14. Die starre Beinauflage 30 weist einen Winkel von 3 Grad zu dem Kabinenboden 50 auf. Die starre Beinauflage 30 ist dabei an einem vorderen Ende des zweiten Flugzeugsitzbereichs 14 angeordnet. Die Beinauflage 30 ist dazu vorgesehen, die Liegefläche 58, die der zweite Flugzeugsitz 16 in der Liegeposition 18 ausbildet, zu vergrößern. Die starre Beinauflage 30 bildet in der Liegeposition 18 des zweiten Flugzeugsitzes 16 zusammen mit der Beinauflage 66, dem Sitzboden 26 und der Rückenlehne 54 des zweiten Flugzeugsitzes 16 die ebene Liegefläche 58 des ersten Flugzeugsitzes 12 aus. Eine Höhe 70 der starren Beinauflage 28 des ersten Flugzeugsitzbereichs 10 ist dabei größer als eine Höhe 72 der starren Beinauflage 30 des zweiten Flugzeugsitzbereichs 14. Die Höhe 70 der ersten starren Beinauflage 28 des ersten Flugzeugsitzbereichs 10 wird dabei senkrecht zu dem Kabinenboden 50 bis zu einem am weitesten entfernten Punkt der starren Beinauflage 28 gemessen. Die Höhe 70 der starren Beinauflage 28 des ersten Flugzeugsitzbereichs 10 beträgt dabei 53,3 cm (21 Zoll). Die Höhe 72 der starren Beinauflage 30 des zweiten Flugzeugsitzbereichs 14 wird dabei senkrecht zu dem Kabinenboden 50 bis zu einem am weitesten entfernten Punkt der starren Beinauflage 30 gemessen. Die Höhe 72 der starren Beinauflage 30 des zweiten Flugzeugsitzbereichs 14 beträgt dabei 22,9 cm (9 Zoll).

Der erste Flugzeugsitzbereich 10 weist einen Monitor 34 auf. Der Monitor 34 des ersten Flugzeugsitzbereichs 10 ist dabei an dem Shellelement 60 des ersten Flugzeugsitzbereichs 10 befestigt. Dabei weist der erste Flugzeugsitzbereich 10 eine nicht näher dargestellte Lagerung auf, über die der Monitor 34 verschwenkbar mit dem Shellelement 60 gekoppelt ist. Der zweite Flugzeugsitzbereich 14 weist einen Monitor 36 auf. Der Monitor 36 des zweiten Flugzeugsitzbereichs 14 ist dabei an dem Shellelement 60 des ersten Flugzeugsitzbereichs 10 befestigt. Dabei weist der erste Flugzeugsitzbereich 10 ebenfalls eine nicht näher dargestellte Lagerung auf, über die der Monitor 34 verschwenkbar mit dem Shellelement 60 gekoppelt ist. Dabei weist der Monitor 34 des ersten Flugzeugsitzbereichs 10 eine Höhe 74 auf, die größer ist als eine Höhe 76 des Monitors 36 des zweiten Flugzeugsitzbereichs 14. Die Höhen 74, 76 der Monitore 34, 36 der Flugzeugsitzbereiche 10, 14 werden dabei senkrecht zu dem Kabinenboden 50 bis zu einem am weitesten entfernten Punkt, also einem oberen Ende des jeweiligen Monitors 34, 36 gemessen. Die Höhe 74 des Monitors 34 des ersten Flugzeugsitzbereichs 10 beträgt dabei 127 cm (50 Zoll). Die Höhe 76 des Monitors 36 des zweiten Flugzeugsitzbereichs 14 beträgt dabei 111,8 cm (44 Zoll). Grundsätzlich sind natürlich auch andere Höhen 74, 76 für die Monitore 34, 36 denkbar. Grundsätzlich ist es ebenfalls denkbar, dass die beiden Monitore 34, 36 zumindest in einem Betriebszustand eine gleiche Höhe aufweisen. Dabei ist es weiter denkbar, dass die wenigstens einer der Monitore 34, 36 in seiner Höhe verstellbar ist und so beispielsweise zur Positionierung für die Liegeposition 18 oder die TTL-Position 24 manuell oder automatisch in seiner Höhe verstellt werden kann. Dabei ist es denkbar, dass der entsprechende Monitor 34, 36 mit einer Kinematik des entsprechenden Flugzeugsitzes 12, 16 gekoppelt ist und bei Verstellung des entsprechenden Flugzeugsitzes 12, 16 automatisch in seiner Höhe an die entsprechende Position des Flugzeugsitzes 12, 16 angepasst wird. Die Flugzeugsitzbereiche 10, 14 weisen jeweils eine Ablagefläche 78, 80 auf. Die Ablageflächen 78, 80 sind dabei jeweils seitlich neben dem entsprechenden Flugzeugsitz 12, 16 des entsprechenden Flugzeugsitzbereichs 10, 14 angeordnet, wie in Figur 4 zu sehen ist. Die Ablageflächen 78, 80 sind dazu vorgesehen, als Tischelement oder Stauraum zu dienen. Die Ablageflächen 78, 80 erstrecken sich dabei neben dem entsprechenden Flugzeugsitz 12, 16 bis hinter die entsprechende Rückenlehne 52, 54 in der TTL-Position 24 des Flugzeugsitzes 12, 16. Dabei ist die Ablagefläche 78 des ersten Flugzeugsitzbereichs 10 einem Flugzeuggang 68 zugewandt. Die Ablagefläche 80 des zweiten Flugzeugsitzbereichs 14 ist dem Flugzeuggang 68 abgewandt. Dabei erstreckt sich die Ablagefläche 78 des ersten Flugzeugsitzbereichs 10 bis zu einer Vorderkante des Sitzbodens 22 des ersten Flugzeugsitzes 12 in der TTL-Position 24. Die Ablagefläche 80 des zweiten Flugzeugsitzbereichs 14 erstreckt sich über eine Vorderkante des Sitzbodens 26 des zweiten Flugzeugsitzes 16 in der TTL-Position 24 hinaus. Durch die verschachtelte Anordnung der Flugzeugsitzeinheiten 42, 48 zueinander können die Ablageflächen 78, 80 dabei vorteilhaft groß ausgebildet werden.

### Bezugszeichen

- 10: Flugzeugsitzbereich
- 12: erster Flugzeugsitz
- 14: Flugzeugsitzbereich
- 16: zweiter Flugzeugsitz
- 18: Liegeposition
- 20: Montageabstand
- 22: Sitzboden
- 24: TTL-Position
- 26: Sitzboden
- 28: Beinauflage
- 30: Beinauflage
- 34: Monitor
- 36: Monitor
- 38: Flugrichtung
- 40: Flugzeugkabine
- 42: Flugzeugsitzeinheit
- 44: Flugzeugsitzbereich
- 46: Flugzeugsitzbereich
- 48: Flugzeugsitzeinheit
- 50: Kabinenboden
- 52: Rückenlehne
- 54: Rückenlehne
- 56: Liegefläche
- 58: Liegefläche
- 60: Shellelement
- 62: Shellelement
- 64: Beinauflage
- 66: Beinauflage
- 68: Flugzeuggang
- 70: Höhe
- 72: Höhe
- 74: Höhe
- 76: Höhe
- 78: Ablagefläche
- 80: Ablagefläche
- 82: Flugzeugsitzbereich
- 84: Flugzeugsitzbereich
- 86: Kabinenwand
- 88: Flugzeugsitzbereich
- 90: Flugzeugsitzbereich
- 92: Kabinenwand
- 94: Flugzeugsitzeinheit
- 96: Flugzeugsitz
- 98: Flugzeugsitz
- 100: Flugzeugsitz
- 102: Flugzeugsitz

## Patentansprüche

1. Flugzeugsitzsystem mit zumindest einem ersten Flugzeugsitzbereich (10), der einen ersten Flugzeugsitz (12) umfasst, der einen Sitzboden (22), der mit einer Rückenlehne (52) des Flugzeugsitzes (12) schwenkbar gekoppelt ist, und eine verschwenkbar mit dem Sitzboden (22) gekoppelte Beinauflage (64) aufweist, mit zumindest einem zweiten, hinter dem ersten Flugzeugsitzbereich (10) angeordneten Flugzeugsitzbereich (14), der einen zweiten Flugzeugsitz (16) umfasst, der einen Sitzboden (26), der mit einer Rückenlehne (54) des Flugzeugsitzes (16) schwenkbar gekoppelt ist, und eine verschwenkbar mit dem Sitzboden (26) gekoppelte Beinauflage (66) aufweist, wobei der erste Flugzeugsitzbereich (10) und der zweite Flugzeugsitzbereich (14) zusammen eine Flugzeugsitzeinheit (42) bilden, wobei der Flugzeugsitz (16) des zweiten Flugzeugsitzbereichs (14) in einem montierten Zustand zumindest in einer Liegeposition (18) zumindest teilweise überlappend unterhalb des ersten Flugzeugsitzbereichs (10) angeordnet ist und wobei die Flugzeugsitze (12, 16) in der Liegeposition (18) eine ebene Liegefläche (56, 58) ausbilden, wobei sich die beiden Liegeflächen (56, 58) der Flugzeugsitze (12, 16) in den Liegepositionen (18) überlappen, und mit einem weiteren ersten Flugzeugsitzbereich (44) und einem weiteren zweiten Flugzeugsitzbereich (46), die zu zweit wieder eine Flugzeugsitzeinheit (48) ausbilden und jeweils einen Flugzeugsitz aufweisen, **dadurch gekennzeichnet, dass** der Sitzboden (22) des ersten Flugzeugsitzes (12) in einer TTL-Position (24) eine gleiche Höhe aufweist wie der Sitzboden (26) des zweiten Flugzeugsitzes (16) in einer TTL-Position (24), wobei die Flugzeugsitzeinheiten (42, 48) mit den Flugzeugsitzbereichen (10, 14, 44, 46) in einer Flugzeugkabine (40) in einer Herringbone-Flugzeugsitzanordnung angeordnet sind, wobei die Flugzeugsitze (12, 16) jeweils schräg zu einer Flugrichtung (38) ausgerichtet sind, wobei die Flugzeugsitzbereiche (10, 14, 44, 46) jeweils einen direkten Gangzugang aufweisen.

2. Flugzeugsitzsystem nach Anspruch 1, **dadurch gekennzeichnet, dass** die Flugzeugsitze (12, 16) der beiden Flugzeugsitzbereiche (10, 14) in einer Flucht zueinander ausgerichtet sind.

3. Flugzeugsitzsystem nach einem der vorhergehenden Ansprüche, **dadurch gekennzeichnet, dass** der Flugzeugsitz (16) des zweiten Flugzeugsitzbereichs (14) in einer Liegeposition (18) um zumindest 25,4 cm (10 Zoll) mit dem Flugzeugsitz (12) des ersten Flugzeugsitzbereichs (10) überlappt.

4. Flugzeugsitzsystem nach einem der vorhergehenden Ansprüche, **dadurch gekennzeichnet, dass** der Flugzeugsitz (12) des ersten Flugzeugsitzbereichs (10) einen Sitzboden (22) aufweist, der bei einer Verstellung von der TTL-Position (24) in die Liegeposition (18) dazu vorgesehen ist, angehoben zu werden.

5. Flugzeugsitzsystem nach einem der vorhergehenden Ansprüche, **dadurch gekennzeichnet, dass** der Flugzeugsitz (16) des zweiten Flugzeugsitzbereichs (14) einen Sitzboden (26) aufweist, der bei einer Verstellung von der TTL-Position (24) in eine Liegeposition (18) dazu vorgesehen ist, abgesenkt zu werden.

6. Flugzeugsitzsystem nach einem der vorhergehenden Ansprüche, **dadurch gekennzeichnet, dass** der erste Flugzeugsitzbereich (10) eine starre Beinauflage (28) aufweist, deren Höhe größer ist als eine Höhe einer starren Beinauflage (30) des zweiten Flugzeugsitzbereichs (14).

7. Flugzeugsitzsystem nach einem der vorhergehenden Ansprüche, **dadurch gekennzeichnet, dass** der erste Flugzeugsitzbereich (10) einen Monitor (34) aufweist, dessen Höhe größer ist als eine Höhe eines Monitors (36) des zweiten Flugzeugsitzbereichs (14).

8. Flugzeugsitzsystem nach einem der vorhergehenden Ansprüche, **gekennzeichnet durch** wenigstens zwei weitere erste und zweite Flugzeugsitzbereiche (44, 46).

9. Flugzeugsitzsystem nach einem der vorhergehenden Ansprüche, **gekennzeichnet durch** wenigstens zwei weitere erste und zweite Flugzeugsitzbereiche (82, 84), die gespiegelt zu den Flugzeugsitzbereichen (10, 14) an einer gegenüberliegenden Kabinenwand (86) angeordnet sind.

10. Flugzeugsitzsystem nach einem der vorhergehenden Ansprüche, **gekennzeichnet durch** wenigstens zwei weitere erste und zweite Flugzeugsitzbereiche (88, 90), die in einem Mittelbereich einer Flugzeugkabine (40) angeordnet und in Flugrichtung (38) zu den Flugzeugsitzbereichen (10, 14) verschoben sind.

11. Flugzeugsitzsystem nach einem der vorhergehenden Ansprüche, **dadurch gekennzeichnet, dass** auf einer Kabinenlänge von 1143 cm (450 Zoll) wenigstens 38 Flugzeugsitzbereiche (10, 14, 44, 46) bereitgestellt werden.

## Claims

1. Aircraft seat system
with at least one first aircraft seat region (10) comprising a first aircraft seat (12) which has a seat bottom (22) that is pivotally coupled with a backrest (52) of the aircraft seat (12) and has a legrest (64) that is pivotally coupled with the seat bottom (22),
with at least one second aircraft seat region (14) arranged behind the first aircraft region (10) and comprising a second aircraft seat (16) which has a seat bottom (26) that is pivotally coupled with a backrest (54) of the aircraft seat (16) and has a legrest (66) that is pivotally coupled with the seat bottom (26),
wherein the first aircraft seat region (10) and the second aircraft seat region (14) together form an aircraft seat unit (42),
wherein the aircraft seat (16) of the second aircraft seat region (14) is in a mounted state, at least in a lying-down position (18), arranged at least with a partial overlap below the first aircraft seat region (10), and
wherein the aircraft seats (12, 16) form in the lying-down position (18) a planar lying-down surface (56, 58),
the two lying-down surfaces (56, 58) of the aircraft seats (12, 16) overlapping in the lying-down positions (18), and
with at least one further first aircraft seat region (44) and a further second aircraft seat region (46), the two of which also forming an aircraft seat unit (48) and respectively comprising an aircraft seat,
**characterised in that** the seat bottom (22) of the first aircraft seat (12) has in a TTL position (24) a same height as the seat bottom (26) of the second aircraft seat (16) in a TTL position (24),
wherein the aircraft seat units (42, 48) with the aircraft seat regions (10, 14, 44, 46) are arranged in an aircraft cabin (40) in a herringbone aircraft seat arrangement, wherein the aircraft seats (12, 16) are in each case oriented obliquely to a flight direction (38),
the aircraft seat regions (10, 14, 44, 46) in each case having direct aisle access.

2. Aircraft seat system according to claim 1,
**characterised in that** the aircraft seats (12, 16) of the two aircraft seat regions (10, 14) are oriented in alignment with each other.

3. Aircraft seat system according to one of the preceding claims,
**characterised in that** in a lying-down position (18) the aircraft seat (16) of the second aircraft seat region (14) overlaps with the aircraft seat (12) of the first aircraft seat region (10) by at least 25.4 cm (10 inches).

4. Aircraft seat system according to one of the preceding claims,
**characterised in that** the aircraft seat (12) of the first aircraft seat region (10) has a seat bottom (22) that is configured to be raised in case of an adjustment from the TTL position (24) into the lying-down position (18).

5. Aircraft seat system according to one of the preceding claims,
**characterised in that** the aircraft seat (16) of the second aircraft region (14) has a seat bottom (26) that is configured to be lowered in case of an adjustment from the TTL position (24) into the lying-down position (18).

6. Aircraft seat system according to one of the preceding claims,
**characterised in that** the first aircraft seat region (10) comprises a rigid legrest (28), whose height is greater than a height of a rigid legrest (30) of the second aircraft seat region (14).

7. Aircraft seat system according to one of the preceding claims,
**characterised in that** the first aircraft seat region (10) comprises a monitor (34), whose height is greater than a height of a monitor (36) of the second aircraft seat region (14).

8. Aircraft seat system according to one of the preceding claims,
**characterised by** at least two further first and second aircraft seat regions (44, 46).

9. Aircraft seat system according to one of the preceding claims,
**characterised by** at least two further first and second aircraft seat regions (82, 84), which are arranged on an opposite-situated cabin wall (86) mirror-symmetrically with respect to the aircraft seat regions (10, 14).

10. Aircraft seat system according to one of the preceding claims,
**characterised by** at least two further first and second aircraft seat regions (88, 90), which are arranged in a middle region of an aircraft cabin (40) and are displaced relative to the aircraft seat regions (10, 14) in the flight direction (38).

11. Aircraft seat system according to one of the preceding claims,
**characterised in that** on a cabin length of 1143 cm (450 inches) at least 38 aircraft seat regions (10, 14, 44, 46) are provided.

## Revendications

1. Système de siège d'avion
avec au moins une première zone siège d'avion (10) qui comprend un premier siège d'avion (12) ayant un fond de siège (22), couplé avec un dossier (52) du siège d'avion (12) de façon pivotable, et un repos-jambe (64) qui est couplé avec le fond de siège (22),
avec au moins une deuxième zone siège d'avion (14) qui est agencé derrière la première zone siège d'avion (10) et comprend un deuxième siège d'avion (16) ayant un fond de siège (26), couplé avec un dossier (54) du siège d'avion (16) de façon pivotable, et un repos-jambe (66) qui est couplé avec le fond de siège (26) de façon pivotable,
où la première zone siège d'avion (10) et la deuxième zone siège d'avion (14) conjointement forment une unité de siège d'avion (42),
où le siège d'avion (16) de la deuxième zone siège d'avion (14) est en état monté, au moins dans une position de couchage (18), agencé au moins partiellement en chevauchement au-dessous de la première zone siège d'avion (10) et
où les sièges d'avion (12, 16) forment dans la position de couchage (18) une surface de couchage planaire (56, 58),
les deux surfaces de couchage planaires (56, 58) des sièges d'avion (12, 16) enchevauchant dans les positions de couchage (18),
et avec une autre première zone siège d'avion (44) et une autre deuxième zone siège d'avion (46), les deux aussi formant une unité de siège d'avion (48) et respectivement comportant un siège d'avion,
**caractérisé en ce que** le fond de siège (22) du premier siège d'avion (12) présente en position TTL (24) la même hauteur que le fond de siège (26) du deuxième siège d'avion (16) en position TTL (24),
où les unités de siège d'avion (42, 48) avec les zones siège d'avion (10, 14, 44, 46) sont agencés dans une cabine d'avion (40) dans un arrangement en épi des sièges d'avion,
les sièges d'avion (12, 16) étant respectivement orientés obliquement par rapport à une direction de vol (38),
chacune des zones siège d'avion (10, 14, 44, 46) comprenant un accès direct à une allée.

2. Système de siège d'avion selon la revendication 1,
**caractérisé en ce que** les sièges d'avion (12, 16) des deux zones siège d'avion (10, 14) sont orientés dans une ligne de fuite l'un par rapport à l'autre.

3. Système de siège d'avion selon l'une des revendications précédentes,
**caractérisé en ce que** dans une position de couchage (18) le siège d'avion (16) de la deuxième zone siège d'avion (14) chevauche avec le siège d'avion (12) de la première zone siège d'avion (10) par au moins 25,4 cm (10 pouces).

4. Système de siège d'avion selon l'une des revendications précédentes,
**caractérisé en ce que** le siège d'avion (12) de la première zone siège d'avion (10) comprend un fond de siège (22) prévu pour être levé dans un ajustement de la position TTL (24) dans la position de couchage (18).

5. Système de siège d'avion selon l'une des revendications précédentes,
**caractérisé en ce que** le siège d'avion (16) de la deuxième zone siège d'avion (14) comrend un fond de siège (26) prévu pour être abaissé dans un ajustement de la position TTL (24) dans la position de couchage (18).

6. Système de siège d'avion selon l'une des revendications précédentes,
**caractérisé en ce que** la première zone siège d'avion (10) comprend un repos-jambe rigide (28) la hauteur duquel est supérieure à une hauteur d'un repos-jambe rigide (30) de la deuxième zone siège d'avion (14).

7. Système de siège d'avion selon l'une des revendications précédentes,
**caractérisé en ce que** la première zone siège d'avion (10) comprend un moniteur (34) la hauteur duquel est supérieure à une hauteur d'un moniteur (36) de la deuxième zone siège d'avion (14).

8. Système de siège d'avion selon l'une des revendications précédentes,
**caractérisé par** au moins deux premières et deuxièmes zones siège d'avion de plus (44, 46).

9. Système de siège d'avion selon l'une des revendications précédentes,
**caractérisé par** au moins deux premières et deuxièmes zones siège d'avion de plus (82, 84) agencés sur une paroi de cabine opposée (86) en miroir par rapport aux zones siège d'avion (10, 14).

10. Système de siège d'avion selon l'une des revendications précédentes,
**caractérisé par** au moins deux premières et deuxièmes zones siège d'avion de plus (88, 90) qui sont agencés dans une zone centrale d'une cabine d'avion (40) et sont déplacées par rapport aux zones siège d'avion (10, 14) en direction de vol (38).

11. Système de siège d'avion selon l'une des revendications précédentes,
**caractérisé en ce qu'**au moins 38 zones siège d'avion (10, 14, 44, 46) sont pourvues sur une longueur de cabine de 1143 cm (450 pouces).
